# EUROPÄISCHE PATENTSCHRIFT

(11) **EP 1 926 261 B1**
(45) Veröffentlichungstag und Bekanntmachung des Hinweises auf die Patenterteilung: **20.07.2011**
(21) Anmeldenummer: 07121602.2
(22) Anmeldetag: 27.11.2007
(51) Int. Cl.: H04L 12/56, H04L 12/14, H04M 15/00

(54) **Verfahren und System zur Optimierung einer Auslastung eines Kommunikationsnetzwerkes**
Method and system for optimising the efficiency of a communications network
Procédé et système d'optimisation de l'exploitation d'un réseau de communication

(30) Priorität: 27.11.2006 DE 102006056199
(43) Veröffentlichungstag der Anmeldung: 28.05.2008
(73) Patentinhaber: Vodafone Holding GmbH, 40213 Düsseldorf (DE)
(72) Erfinder: Wiedemann, Robert, 40547, Düsseldorf (DE)
(74) Vertreter: Vogel, Andreas

(56) Entgegenhaltungen:
- EP-A- 0 526 118
- EP-A- 0 939 539
- EP-A- 1 395 029
- WO-A-99/66706
- DE-A1- 10 311 882
- US-A1- 2003 017 828

## Beschreibung

Die Erfindung betrifft ein Verfahren sowie ein System zur Optimierung einer Auslastung eines Kommunikationsnetzwerkes, insbesondere eines Mobilfunknetzwerkes.

In bekannten Kommunikationsnetzwerken ist die Kapazität eine entscheidende Größe. Einerseits muss eine angemessen große Kapazität bereitgestellt werden, um Spitzenlasten in Hauptnutzungszeiten, wie den Morgen- und Nachmittagsstunden aufzufangen. Andererseits sollte das Kommunikationsnetzwerk nur möglichst geringe überschüssige Kapazitäten aufweisen, da diese sonst nur Kosten verursachen. Um trotz des im Tagesverlauf stark schwankenden Kommunikationsverhaltens eine annähernd gleichmäßige Auslastung des Kommunikationsnetzwerkes zu erreichen, berechnen die Anbieter von Kommunikationsnetzwerken häufig unterschiedliche Gebühren zu unterschiedlichen Tages- und Nachtzeiten, um so einen Anreiz zu schaffen außerhalb der Hauptnutzungszeiten zu kommunizieren. Deshalb sind häufig die Gebühren für ein in den Abendstunden geführtes Gespräch deutlich geringer als jene für ein tagsüber geführtes. Es hat sich allerdings gezeigt, dass dadurch nur wenige Gespräche aus den Arbeitsstunden in die Abendstunden verschoben werden können. Folglich verbleibt die sehr unterschiedliche Auslastung des Kommunikationsnetzwerkes bestehen.

Um diesen Zustand zumindest teilweise zu verbessern, zeigt die EP 0 526 118 B1 ein Verfahren auf, bei dem die Gebühr für eine Kommunikationsverbindung aus dem Abstand der beiden Teilnehmer sowie der aktuellen Last des Kommunikationsnetzwerkes bestimmt wird. Der Begriff Last beschreibt dabei das Verhältnis der Anzahl der momentanen Nutzer des Kommunikationsnetzwerkes zur maximalen Anzahl der Nutzer. Dieses Verfahren führt zu einer verbesserten Auslastung, da die Gebühr für eine Kommunikation an die sich - auch kurzfristig - ändernden Bedingungen des Kommunikationsnetzwerkes angepasst werden kann. In den Patentanmeldungen WO 99/66706, US2003/0017828 und EP0939539 werden ähnliche Verfahren beschrieben, die zur Verbesserung der Auslastung eines Kommunikationsnetzes dienen.

Aufgabe der Erfindung ist es, ein Verfahren sowie ein System zur Optimierung einer Auslastung eines Kommunikationsnetzwerkes zu schaffen, welches insbesondere eine individuelle Anpassung eines Leistungsumfanges einer Leistung auf einen Benutzer einer Kommunikationseinheit ermöglicht.

Die Aufgabe wird erfindungsgemäß gelöst durch ein Verfahren zur Optimierung einer Auslastung eines Kommunikationsnetzwerkes gemäß des unabhängigen Patentanspruches 1. In den abhängigen Ansprüchen sind bevorzugte Weiterbildungen der Erfindung aufgeführt. Darüber hinaus wird die Aufgabe durch ein Kommunikationssystem nach Anspruch 13 gelöst.

Erfindungsgemäß wird die Aufgabe gelöst durch ein Verfahren zur Optimierung einer Auslastung eines Kommunikationsnetzwerkes, mit einer Kommunikationseinheit und einer Rechnereinheit, wobei die Kommunikationseinheit eine charakteristische Adressierung aufweist, die Kommunikationseinheit elektronisch eine Kommunikationsverbindung zu der Rechnereinheit im Kommunikationsnetzwerk herstellt, über die Kommunikationsverbindung von der Kommunikationseinheit elektronisch ein Angebot an die Rechnereinheit übersandt wird, die Rechnereinheit unmittelbar oder mittelbar auf mindestens ein Analysemittel zugreift, durch das Analysemittel zeitnah eine Auslastung des Kommunikationsnetzwerkes bestimmt wird, die Rechnereinheit aus der Auslastung des Kommunikationsnetzwerkes sowie dem Angebot einen Leistungsumfang einer Leistung berechnet, und der Leistungsumfang mittels der Kommunikationsverbindung an die Kommunikationseinheit übersandt wird.

Als Kommunikationseinheit wird hierbei ein System bezeichnet, das Signale, insbesondere Daten- oder Informationen, verarbeiten und in wenigstens eine Richtung übermitteln kann. Es kann sich dabei insbesondere um ein Mobiltelefon, also ein tragbares, batteriebetriebenes Funktelefon handeln oder auch um eine Datenkarte, die in einen Computer integriert werden kann. Kommunikation im Sinne der Erfindung ist insbesondere eine Daten- oder Informationsübertragung. Diese kann auf eine Richtung beschränkt sein oder zwischen zwei Komponenten bidirektional erfolgen.

Unter dem Begriff Kommunikationsnetzwerk ist insbesondere ein Telekommunikationsnetzwerk zu verstehen, das für die Abwicklung von Telefongesprächen konstruiert ist. Ebenfalls kann es sich bei dem Kommunikationsnetzwerk um ein Mobilfunknetz handeln. Bei einem solchen Mobilfunknetz können der Empfänger und prinzipiell auch der Sender mobil eingesetzt werden. Dabei umfasst die Kommunikation in einem Mobilfunknetz sämtliche Kommunikationen zu Wasser, zu Lande und in der Luft. Die Kommunikation reicht vom Privatbereich mit der schnurlosen Telefonie (CT und DECT) und Bluetooth, über alle Mobilfunknetze für die Sprachkommunikation (GSM, UMTS, 4G), den Bündelfunk, Betriebsfunk und Funkruf bis hin zur Satellitenkommunikation.

Unter dem Begriff Auslastung ist im Rahmen der Erfindung die tatsächliche Nutzung einer Ressource des Kommunikationsnetzwerkes im Verhältnis zur maximal möglichen Nutzung in einem bestimmten Zeitraum gemeint. Die wichtigste Ressource eines modernen Kommunikationsnetzwerkes ist die Anzahl der zur Verfügung stehenden Kommunikationskanäle. Die Begrenztheit dieser Ressource ist insbesondere bei Mobilfunknetzen zu erkennen, welche eine wabenartige Struktur mit einzelnen Funkzellen aufweisen. Die maximale Anzahl von möglichen Kommunikationsverbindungen in einer solchen Funkzelle ist begrenzt durch die Kommunikationskanäle der die Funkzelle aufspannenden BTS (Base Transceiver Station). Ist diese Anzahl erreicht, können keine weiteren Kommunikationsverbindungen aufgebaut werden.

Der Kern des erfindungsgemäßen Verfahrens liegt darin, dass das Kommunikationsnetzwerk den Leistungsumfang für eine Verbindung an die jeweilige Auslastung anpasst. Um einem Benutzer einen Anreiz zur Kommunikation zu geben, ermöglicht das erfindungsgemäße Verfahren, dass der Benutzer jederzeit ein Angebot an das Kommunikationsnetzwerk übersenden kann und als Antwort einen Leistungsumfang einer Leistung erhält. Dabei ist der Leistungsumfang jeweils an die aktuelle Auslastung angepasst. Möchte folglich ein Benutzer beispielsweise ein Ferngespräch führen oder eine gewisse Anzahl von SMS (Short Message Service) versenden, so ist der Benutzer in der Lage durch ein regelmäßiges Übersenden eines Angebotes den günstigsten Tarif zu ermitteln, um die Kommunikationen auszuführen. Die Besonderheit liegt somit darin, dass das Kommunikationsnetzwerk beispielsweise fortwährend eine mit der Auslastung abgestimmte Gebühr berechnet und diese mittels eines entsprechenden Angebotes abgefragt werden kann. Das Ergebnis des erfindungsgemäßen Verfahrens ist folglich die Schaffung eines Anreizes für den Benutzer die Dienstleistungen des Kommunikationsnetzwerkes dann zu nutzen, wenn das Kommunikationsnetzwerk nicht vollständig ausgelastet ist.

Das Kommunikationsnetzwerk berechnet aus der aktuellen Auslastung einen dem Angebot entsprechenden Leistungsumfang einer Leistung. Sowohl das Angebot als auch die berechnete Leistung können dabei verschiedenster Art sein. So ist es denkbar, dass der Benutzer mittels des Angebotes einen definierten Betrag einer Währung an das Kommunikationsnetzwerk übermittelt. Die vom Kommunikationsnetzwerk angebotene Leistung kann beispielsweise in einer berechneten Anzahl von SMS, MMS bzw. WAP Minuten aus einem Zeitintervall für die Nutzung des Kommunikationsnetzwerkes bestehen. Im Gegensatz dazu wäre es auch möglich, dass die Leistung im Vorhinein bestimmt ist und das Angebot einen Geldbetrag für diese Leistung umfasst. Dementsprechend kann beispielsweise der Benutzer einen Geldbetrag übermitteln, den er bereit ist pro Minute für eine Kommunikationsverbindung zu zahlen. Das Kommunikationsnetzwerk entscheidet in diesem Fall, ob im Anbetracht der aktuellen Auslastung eine Kommunikationsverbindung gewährt werden kann oder nicht. Um diese Aussage zu treffen, bestimmt das Analysemittel die Auslastung des Kommunikationsnetzwerkes zeitnah. Als vorteilhaft hat es sich erwiesen, wenn die Auslastung bei jedem eingehenden Angebot aufs Neue bestimmt und an das Kommunikationsnetzwerk übermittelt wird. In einer weiteren Ausgestaltung kann das Analysemittel die Auslastung aber auch in etwa zeitgleichen Abschnitten bestimmen und an das Kommunikationsnetzwerk übermitteln.

Die Bereitstellung der jeweils aktuellen Auslastung des Kommunikationsnetzwerkes führt zu einer vorteilhaften Ausgestaltung des erfindungsgemäßen Verfahrens. Diese Ausgestaltung ist dadurch gekennzeichnet, dass
(a) mittels der Kommunikationseinheit elektronisch die Kommunikationsverbindung zu der Rechnereinheit im Kommunikationsnetzwerk hergestellt wird,
(b) das Angebot mittels eines Eingabemittels in die Kommunikationseinheit eingegeben wird,
(c) über die Kommunikationsverbindung von der Kommunikationseinheit elektronisch das Angebot an die Rechnereinheit übersandt wird,
(d) die Rechnereinheit unmittelbar oder mittelbar auf mindestens ein Analysemittel zugreift,
(e) durch das Analysemittel zeitnah eine Auslastung des Kommunikationsnetzwerkes bestimmt wird,
(f) von dem Analysemittel die Auslastung des Kommunikationsnetzwerkes für den Zugriff der Rechnereinheit bereitgestellt wird,
(g) mittels der Rechnereinheit aus der Auslastung in Verbindung mit dem Angebot ein Leistungsumfang einer Leistung berechnet wird,
(h) und mittels der Kommunikationsverbindung der Leistungsumfang der Leistung an die Kommunikationseinheit übersandt wird.

Das Analysemittel kann erfindungsgemäß ein Teil einer zentralen Rechnereinheit sein, was sich insbesondere dann anbietet, wenn es sich bei dem Kommunikationsnetzwerk um ein kabelgebundenes Netzwerk handelt. Im Gegensatz dazu hat es sich bei Mobilfunknetzen als vorteilhaft erwiesen, wenn das Analysemittel dezentral ausgebildet ist. Beispielsweise kann jeweils eine Einheit des Analysemittels in ein Feststationssystem (BSS, Base Station Subsystem) integriert sein, um die Auslastung jeder einzelnen Funkzelle individuell zu bestimmen und an die zentrale Rechnereinheit zu übermitteln. Gleichzeitig könnte bei dieser Art der Messung von der Rechnereinheit immer nur die Auslastung der Funkzellen bestimmt werden, von der einerseits die Kommunikationsverbindung ausgeht und zu der andererseits die Kommunikationsverbindung aufgebaut werden soll. Um nicht einen permanenten Zugriff der Rechnereinheit auf die verschiedenen Subsysteme des Analysemittels zu benötigen, könnte das Analysemittel in etwa zeitgleichen Abschnitten die Auslastung des gesamten bzw. der einzelnen Teile des Kommunikationsnetzwerkes bestimmen und in einer Datenbank hinterlegen. Die Rechnereinheit könnte dann auf diese Datenbank zugreifen und so die benötigten Informationen erhalten.

Eine weitere vorteilhafte Ausführungsvariante des erfindungsgemäßen Verfahrens zeichnet sich dadurch aus, dass im Anschluss an Schritt (h)
(i) in dem Kommunikationsnetzwerk eine Ressource bereitgestellt wird, die dem Leistungsumfang der Leistung entspricht.
Nachdem das Kommunikationsnetzwerk den Leistungsumfang einer vorher definierten Leistung an die Kommunikationseinheit übermittelt hat, kann der Benutzer entscheiden, ob er bereit ist für sein Angebot diesen Leistungsumfang zu akzeptieren. Ist dieses der Fall, kann das Kommunikationsnetzwerk die Leistung für den Benutzer bereitstellen. Handelt es sich beispielsweise bei der Leistung um ein Telefongespräch, so kann das Kommunikationsnetzwerk einen entsprechenden Kommunikationskanal bestimmen, über den später kommuniziert werden soll.

In einer weiteren vorteilhaften Ausgestaltung kann mittels einer Menüsteuerung über die Kommunikationseinheit das Angebot an die Rechnereinheit übersandt werden. Dabei umfasst der Begriff Menüsteuerung sowohl Hardware- als auch Softwarekomponenten, die es dem Benutzer der Kommunikationseinheit ermöglichen, das Angebot an das Kommunikationsnetzwerk zu übermitteln. Bei den Hardwarekomponenten kann es sich beispielsweise um eine Taste oder ein Eingabemittel handeln, welches mit einer vordefinierten Funktion belegt ist. Durch eine Betätigung des Eingabemittels wird diese Funktion ausgeführt und ein entsprechendes Angebot übersandt. Zusätzlich können noch weitere Informationen, wie etwa die Höhe des Angebotes eingegeben werden müssen oder es kann ein vordefinierter Wert für das Angebot automatisch ausgewählt werden. Des Weiteren kann es sich bei der Menüsteuerung auch um eine Softwarekomponente handeln, die in der Kommunikationseinheit integriert ist. Gerade moderne Mobilfunktelefone weisen eine umfangreiche Software auf, in welcher eine Funktion integriert sein kann, die die Übermittlung des Angebotes sicherstellt. So kann beispielsweise die Software eine Auswahl der verschiedenen Leistungen aufführen, für die der Benutzer ein Angebot abgeben kann. Nach einer entsprechenden Auswahl bedarf es dann nur noch der Eingabe eines Betrages einer Währung oder der Größe einer Kommunikationsdienstleistung um das Angebot zu vervollständigen. Handelt es sich bei dem Kommunikationsnetzwerk um ein Mobilfunknetz, kann die Übermittlung des Angebotes auch mittels eines USSD-Dienstes (Unstructured Supplementary Services) erfolgen. Dabei handelt es sich um einen Übermittlungsdienst für GSM-Netze, der eine einfache Nutzung von Mobilfunkzusatzdiensten ermöglicht und ein teilweise vordefiniertes Format aufweist.

Gemäß einer weiteren Ausführungsform des erfindungsgemäßen Verfahrens wird mit dem Angebot ein Informationssatz an die Rechnereinheit übersandt und der Informationssatz bei der Berechnung des Leistungsumfanges der Leistung berücksichtigt. In einer vorteilhaften Ausgestaltung weist der Informationssatz einen Angabensatz auf, welcher eine Authentifizierung der Kommunikationseinheit ermöglicht. Als Authentifizierung wird dabei der Vorgang der Überprüfung der Identität eines Gegenübers, wie z. B. einer Person oder einer Kommunikationseinheit bezeichnet. Die Authentifizierung hat den Zweck, Systemfunktionen vor Missbrauch zu schützen. Um dieses zu ermöglichen, kann der Informationssatz eine charakteristische Adressierung enthalten, wobei insbesondere die charakteristische Adressierung eine Telefonnummer (MSISDN), eine internationale Mobilfunkteilnehmerkennung (IMSI) und/oder eine fortlaufende herstellerabhängige Fertigungsnummer (IMEI) ist. Mittels zumindest einer dieser Nummern ist es dem Kommunikationsnetzwerk bzw. der Rechnereinheit möglich, den Benutzer eindeutig zu authentifizieren. Dieses ist insbesondere dann von Interesse wenn in dem Kommunikationsnetzwerk unterschiedliche Benutzerprofile angeboten werden. Um den zum Teil stark differierenden Ansprüchen der Benutzer gerecht zu werden, bieten die Betreiber der Kommunikationsnetzwerke unterschiedliche Verträge an. Mittels dieser Verträge können die Benutzer die Art und den Umfang der gewünschten Leistung innerhalb des Kommunikationsnetzwerkes individuell bestimmen. In Abhängigkeit von dem sich so ergebenden Benutzerprofil kann der von der Rechnereinheit bestimmte Leistungsumfang der Leistung variieren.

Darüber hinaus ermöglicht der Angabensatz die Bestimmung des Ortes der Kommunikationseinheit innerhalb des Kommunikationsnetzwerkes. Dieses ist insbesondere bei der Bestimmung der lokalen Auslastung des Mobilfunknetzes wichtig. In einer weiteren vorteilhaften Ausgestaltung des Verfahrens wird sowohl die Position der Kommunikationseinheit als auch einer zweiten Kommunikationseinheit bestimmt. Dazu bietet es sich an, mit dem Angebot eine zweite charakteristische Adressierung der zweiten Kommunikationseinheit zu übersenden. Mittels diesen beiden Informationen kann eine Entfernung zwischen den Kommunikationseinheiten bestimmt und bei der Berechnung des Leistungsumfanges der Leistung berücksichtigt werden. Dabei ist von dem Begriff Entfernung einerseits der geografische Abstand der beiden Kommunikationseinheiten umfasst. Andererseits kann der Begriff Entfernung auch im Sinne einer Netztopologie verstanden werden. So können beispielsweise Anrufe im gleichen Ortsnetz, ins nationale Festnetz oder in ein anderes Mobilfunknetz mit jeweils einer vordefinierten Entfernung gleichgesetzt werden.

Nach der Bestimmung der Position der Kommunikationseinheit bietet es sich insbesondere in Mobilfunknetzen an, diese Position mit einer vorher in einer Datenbank hinterlegten Position oder einem Gebiet zu vergleichen. Diese Position oder dieses Gebiet kann im Rahmen eines Vertrages als bevorzugt angesehen werden und so zu einer Beeinflussung bei der Berechnung des Leistungsumfanges der Leistung führen.

Beispielsweise kann es sich bei dem Gebiet um das Wohnhaus des Benutzers der Kommunikationseinheit handeln. Sobald sich der Benutzer innerhalb des Hauses befindet, wird für eine Kommunikation mit der Kommunikationseinheit ein begünstigter Tarif abgerechnet.

In einer weiteren Ausführungsvariante ist es vorgesehen, dass
(i) von der Rechnereinheit automatisch, autonom und/oder in etwa zeitgleichen Abständen auf das Analysemittel zur Ermittlung der Auslastung des Kommunikationsnetzwerkes zugegriffen wird,
(ii) und aus der Auslastung des Kommunikationsnetzwerkes von der Rechnereinheit ein Schwellenwert für das Angebot berechnet wird.
Bei dieser Ausgestaltung ermittelt die Rechnereinheit automatisch, autonom und/oder in etwa zeitgleichen Abständen die Auslastung des Kommunikationsnetzwerkes und bestimmt aus diesen Informationen einen Schwellenwert. Durch dieses dynamische aber zeitkontinuierliche Verfahren bedarf es keines eingehenden Angebotes um die Bestimmung der Auslastung auszulösen. Vielmehr ist zu jeder Zeit in der Rechnereinheit der Schwellenwert hinterlegt, mit dem das Angebot verglichen wird. Es erfolgt eine Trennung des Vergleiches des Angebotes mit der aktuellen Auslastung und der Bestimmung der Auslastung als solcher. Letztere wird in etwa zeitgleichen Abständen ermittelt, wobei eine Anzahl und/oder eine Art der eingehenden Angebote unberücksichtigt bleiben kann.

Gemäß einer weiteren Variante des erfindungsgemäßen Verfahrens wird von der Rechnereinheit ermittelt, ob das Angebot über oder unter dem aktuellen Schwellenwert liegt und nur in dem Fall, dass der Betrag des Angebotes über dem berechneten Schwellenwert liegt, der Leistungsumfang der Leistung verschieden von Null ist. Somit bedarf es nur noch eines Vergleiches des Angebotes mit dem Schwellenwert, damit die Rechnereinheit bestimmen kann, ob ein Leistungsumfang einer Leistung an die Kommunikationseinheit übermittelt werden muss oder nicht. Dieses Verfahren hat den Vorteil, dass nicht jedes Angebot mit einer definierten Leistung zurückgesendet werden muss. Vielmehr werden nur jene ernsthaften Angebote, die oberhalb des Schwellenwertes liegen beantwortet.

In einer weiteren vorteilhaften Ausführungsform des beschriebenen erfindungsgemäßen Verfahrens kann die Antwort der Rechnereinheit auf das Angebot vordefiniert sein. Ist das Angebot oberhalb der Schwelle, wird an die Kommunikationseinheit die vordefinierte Antwort übersandt. Liegt das Angebot unterhalb der Schwelle ist der an die Kommunikationseinheit übermittelte Leistungsumfang identisch Null. Bei dieser Art des Verfahrens variiert einerseits die Schwelle dynamisch mit der Auslastung des Kommunikationsnetzwerkes. Anderseits ist der Leistungsumfang der Leistung unabhängig von dem vorher übermittelten Angebot der Kommunikationseinheit. Entscheidend ist ausschließlich, ob das Angebot ober- oder unterhalb der Schwelle liegt. So könnte beispielsweise mit dem Angebot ein Betrag einer Währung übermittelt werden, den der Benutzer bereit ist, für eine Kommunikationsverbindung zu zahlen. Liegt dieser Betrag oberhalb der von der Rechnereinheit berechneten Schwelle, wird dem Benutzer signalisiert, dass eine entsprechende Kommunikation möglich ist. Kommt durch eine entsprechende Bestätigung die Kommunikationsverbindung zustande besteht einerseits die Möglichkeit, für die Kommunikationsverbindung den Preis des Schwellenwertes abzurechnen oder das vom Benutzer übermittelte Angebot wahrzunehmen. Wird das Angebot abgerechnet, erfährt der Benutzer nicht wie hoch der tatsächliche Schwellenwert lag.

Um einen kontinuierlichen Verlauf des Schwellenwertes über den Tag sicherzustellen, kann das Analysemittel in einer weiteren vorteilhaften Ausführungsform automatisch, autonom und in etwa zeitgleichen Abschnitten die Auslastung des Kommunikationsnetzwerkes bestimmen. Dabei hat es sich als vorteilhaft erwiesen, wenn die zeitgleichen Abschnitte zwischen 1 Sek. und 10 Min., bevorzugt zwischen 10 Sek. und 5 Min., besonders bevorzugt zwischen 10 Sek. und 1 Min. liegen. Diese Zeitintervalle decken die zweifache Standardabweichung (σ) der normalverteilten Gesprächsdauern ab. So ist sichergestellt, dass einerseits größere Schwankungen der Auslastung zuverlässig detektiert werden. Andererseits die Anzahl der Messungen nicht unnötig groß ist. In einer weiteren Ausgestaltung kann von der Rechnereinheit automatisch, autonom und in etwa zeitgleichen Abständen auf das Analysemittel zugegriffen werden. Dabei sollten die zeitgleichen Abstände zwischen 1 Sek. und 10 Min., bevorzugt zwischen 10 Sek. und 5 Min., besonders bevorzugt zwischen 10 Sek. und 1 Min. liegen.

In einer weiteren Variante des erfindungsgemäßen Verfahrens ist von dem Benutzer nach Übersendung des Leistungsumfangs an die Kommunikationseinheit entscheidbar, ob die Leistung angenommen wird. So ist es denkbar, dass auf einem Anzeigemittel der Kommunikationseinheit der Leistungsumfang der Leistung dargestellt wird. Weiterhin könnte der Leistungsumfang dem Benutzer auch akustisch mitgeteilt werden. Im Anschluss daran besteht dann die Möglichkeit diesen Leistungsumfang mittels einer Taste des Eingabemittels und/oder der Menüsteuerung anzunehmen oder abzulehnen.

Die der Erfindung zugrunde liegende Aufgabe wird ebenfalls durch ein Kommunikationssystem mit einer Kommunikationseinheit und einem Kommunikationsnetzwerk gelöst, welches nach einem der oben beschriebenen Verfahren betreibbar ist. Dabei gelten Vorteile, Merkmale und Details, die im Zusammenhang mit dem erfindungsgemäßen Verfahren beschrieben sind selbstverständlich auch im Zusammenhang mit dem erfindungsgemäßen Kommunikationssystem und umgekehrt.

Weitere Maßnahmen, Vorteile, Merkmale und Effekte der Erfindung ergeben sich aus den Unteransprüchen, der nachfolgenden Beschreibung, sowie den Zeichnungen. In den Zeichnungen ist die Erfindung in mehreren Ausführungsbeispielen schematisch dargestellt. Es zeigen:
- Fig. 1: eine Kommunikationseinheit und ein Kommunikationsnetzwerk,
- Fig. 2: die Kommunikationseinheit beim Übermitteln eines Angebotes und beim Empfang eines Leistungsumfanges und
- Fig. 3: die Kommunikationseinheit verbunden mit einer zweiten Kommunikationseinheit über eine Kommunikationsverbindung.

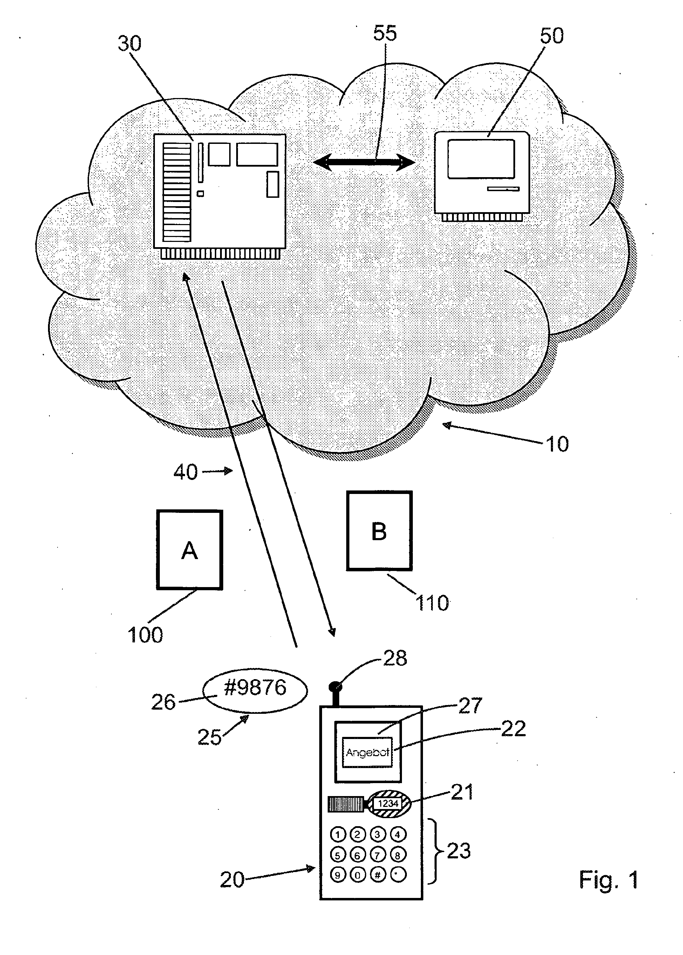

In Fig. 1 ist schematisch ein Kommunikationsnetzwerk 10 und eine Kommunikationseinheit 20 dargestellt. Die Kommunikationseinheit 20 weist ein als Tastatur ausgestaltetes Eingabemittel 23 auf. Über dieses Eingabemittel 23 kann der Benutzer Angaben in den nicht dargestellten Speicher der Kommunikationseinheit 20 eingeben. Diese Angaben werden auf einem Anzeigemittel 27 dargestellt. Bei dem Anzeigemittel 27 kann es sich um einen Flachbildschirm handeln, der nach einer Flüssigkristall- oder Plasmatechnik arbeitet. In der Kommunikationseinheit 20 ist ein Identifzierungselement integriert, welches einen Prozessor und einen Speicher aufweist. In dem Speicher ist eine charakteristische Adressierung 21 gespeichert, mittels derer eine eindeutige Authentifizierung der Kommunikationseinheit 20 gegenüber dem Kommunikationsnetzwerk 10 möglich ist. Erfindungsgemäß kann diese charakteristische Adressierung 21 eine IMEI, eine IMSI und/oder eine PIN beinhalten.

Das in Fig. 1 dargestellte Kommunikationsnetzwerk 10 weist eine Rechnereinheit 30 und ein Analysemittel 50 auf. Das Analysemittel 50 und die Rechnereinheit 30 sind über eine Datenleitung 55 unmittelbar oder mittelbar miteinander verbunden. Das dargestellte Kommunikationsnetzwerk 10 soll schematisch für ein komplexes und hoch granulares Mobilfunknetz stehen. Dabei sind in Fig. 1 nicht die einzelnen Elemente dargestellt, welche benötigt werden, um ein Mobilfunknetz aufzuspannen. Die Fig. 1 soll nicht als Beschränkung verstanden werden, sondern nur als schematische Darstellung. So ist es vielmehr möglich, die Rechnereinheit 30 und das Analysemittel 50 bzw. Teile des Analysemittels 50 in Subsystemen des Mobilfunknetzes zu integrieren, insbesondere in ein Feststationensystem (BSS), eine Feststationsteuerung (BSC) und/oder eine Sende- und Empfangsstation (BTS- Base Transceiver Station).

Damit die Kommunikationseinheit 20 mit dem Kommunikationsnetzwerk 10 kommunizieren kann, weist erstere eine Antenne 28 auf. Bei der Antenne 28 handelt es sich um eine in konstruktiver Baueinheit ausgeführte Kombination aus Sender und Empfänger. Mittels dieser Antenne 28 kann die Kommunikationseinheit 20 eine Kommunikationsverbindung 40 aufbauen. Über diese Kommunikationsverbindung 40 ist ein einseitiger oder wechselseitiger Austausch von Sprache, Text, Grafiken oder Daten möglich. Des Weiteren kann die Kommunikationseinheit 20 über die Kommunikationsverbindung 40 eine Verbindung mit der Rechnereinheit 30 im Kommunikationsnetzwerk 10 herstellen. Erfindungsgemäß kann ein Benutzer der Kommunikationseinheit 20 mittels einer Menüsteuerung 22 ein Angebot 100 in die Kommunikationseinheit 20 eingeben und über die Kommunikationsverbindung 40 an die Rechnereinheit 30 übersenden. Wie oben dargelegt, kann es sich bei der Menüsteuerung 22 sowohl um ein Hardware- als auch ein Softwaresystem handeln. Denkbar ist es, dass das Angebot 100 mittels des Eingabemittels 23 in die Kommunikationseinheit 20 eingegeben wird. Weiterhin kann ein vordefiniertes Angebot 100 in der Kommunikationseinheit 20 hinterlegt sein und durch die Betätigung einer entsprechenden Taste des Eingabemittels 23 auf dem Anzeigemittel 27 erscheinen. Nach Betätigung einer weiteren Taste des Eingabemittels 23 könnte dann das Angebot 100 an die Rechnereinheit 30 übersandt werden.

Das Analysemittel 50 ist in das Kommunikationsnetzwerk 10 integriert und ermittelt dessen Auslastung. Dazu kann beispielsweise die Größe der übertragenen Datenübertragungsrate bestimmt und mit der maximalen Datenübertragungsrate des Kommunikationsnetzwerkes 10 verglichen werden. Handelt es sich bei dem Kommunikationsnetzwerk 10 um ein Mobilfunknetz, kann insbesondere die Auslastung einer einzelnen Funkzelle oder die Auslastung eines Feststationssystems (BSS) bestimmt werden. Vorteilhafterweise wird die Auslastung jener Funkzelle bestimmt, in der die Kommunikationseinheit 20 eingebucht ist. Die Bestimmung der Auslastung kann dabei zeitnahe nach Empfang des Angebotes 100 bzw. des Zugriffes der Rechnereinheit 30 auf das Analysemittel 50 geschehen. Von dem Begriff zeitnahe ist ebenfalls umfasst, dass das Analysemittel 50 in etwa zeitgleichen Abständen die Auslastung bestimmt und den so ermittelten Wert in einer Datenbank hinterlegt. Auf diese Datenbank kann die Rechnereinheit 30 dann zugreifen und so die aktuelle Auslastung mittelbar bestimmen.

Aus dem Wert für die Auslastung des Kommunikationsnetzwerkes 10 sowie dem Angebot 100 berechnet die Rechnereinheit 30 einen Leistungsumfang 110 einer Leistung 111. Der Leistungsumfang 110 wird, wie in Fig. 1 dargestellt, mittels der Kommunikationsverbindung 40 an die Kommunikationseinheit 20 übersandt und auf dem Anzeigemittel 27 dargestellt. Im Anschluss daran obliegt es dem Benutzer der Kommunikationseinheit 20 das Angebot 100 anzunehmen oder abzulehnen. Dazu kann er sich einer Taste des Eingabemittels 23 bedienen.

Ein Teil des Angebotes 100 ist ein Informationssatz 25, der an die Rechnereinheit 30 übersandt und bei der Berechnung des Leistungsumfanges 110 der Leistung 111 berücksichtigt wird. Der Informationssatz 25 weist einen Angabensatz 26 auf, welcher eine Authentifizierung der Kommunikationseinheit 20 ermöglicht. Dieses erlaubt es der Rechnereinheit 30 den Leistungsumfang 110 auf ein individuelles Benutzerprofil der Kommunikationseinheit 20 bzw. deren Benutzer abzustellen. Wird beispielsweise über die Kommunikationseinheit 20 häufig und viel im Kommunikationsnetzwerk 10 kommuniziert, kann dieser Einfluss auf die Berechnung des Leistungsumfanges 110 haben. Beispielhaft könnte bei einer hohen Auslastung des Kommunikationsnetzwerkes 10 eine derartige Kommunikationseinheit 20 vorrangig bedient werden. Des Weiteren erlaubt es der Angabensatz 26 bzw. die charakteristische Adressierung 21 die Position der Kommunikationseinheit 20 innerhalb des Kommunikationsnetzwerkes 10 zu bestimmen.

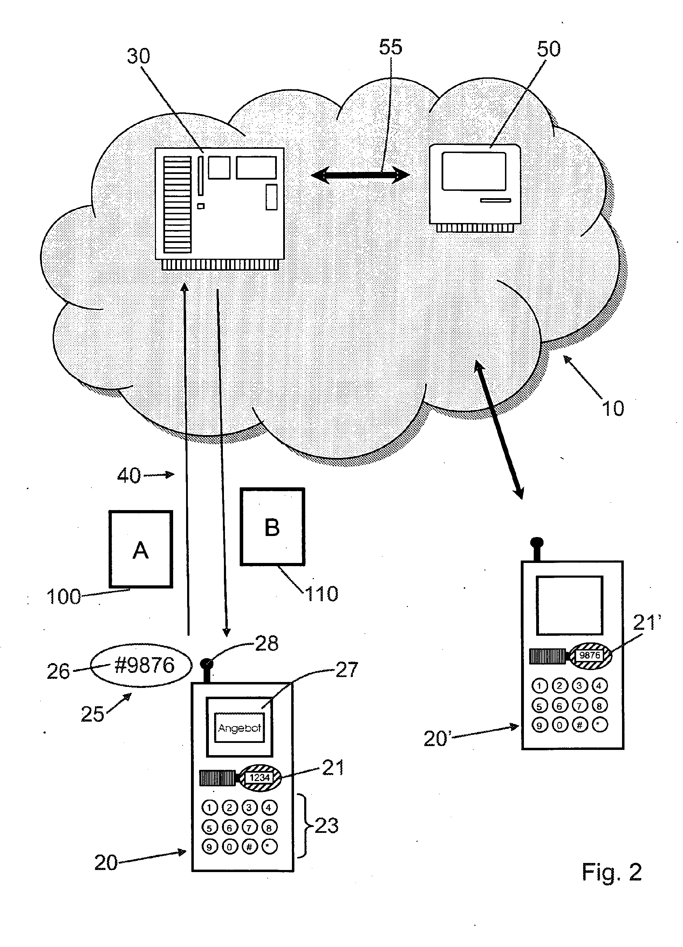

In Fig. 2 ist eine zweite Ausführungsvariante des erfindungsgemäßen Verfahrens dargestellt. Mittels der Kommunikationseinheit 20 wird eine elektronische Kommunikationsverbindung 40 zu der Rechnereinheit 30 im Kommunikationsnetzwerk 10 aufgebaut und das Angebot 100 übersandt. Wie schon beschrieben, greift die Rechnereinheit 30 unmittelbar oder mittelbar auf zumindest ein Analysemittel 50 zu, welches zeitnah eine Auslastung des Kommunikationsnetzwerkes 10 bestimmt. Durch die Rechnereinheit 30 wird aus der Auslastung in Verbindung mit dem Angebot 100 ein Leistungsumfang 110 berechnet und im Anschluss über die Kommunikationsverbindung 40 an die Kommunikationseinheit 20 übersandt. Im Gegensatz zum ersten Ausführungsbeispiel weist der Informationssatz 25 einen Angabensatz 26 auf, welcher die charakteristische Adressierung 21' einer zweiten Kommunikationseinheit 20' beinhaltet. Dadurch ist es dem Kommunikationsnetzwerk 10 möglich, sowohl den Standort der Kommunikationseinheit 20 als auch jenen der zweiten Kommunikationseinheit 20' zu bestimmen und eine Entfernung zwischen beiden zu ermitteln. Dabei umfasst der Begriff Entfernung die netzwerktopologische Bedeutung, ob beide Kommunikationseinheiten 20, 20' innerhalb desselben Ortsnetzes, innerhalb eines Landes oder eine von beiden Kommunikationseinheiten 20, 20' im Ausland befindlich ist. Diese Information wird anschließend bei der Berechnung des Leistungsumfanges 110 berücksichtigt.

Erfindungsgemäß ist es vorgesehen, dass die Rechnereinheit 30 ein Schwellenwert für das Angebot 100 berechnet. Dazu greift die Rechnereinheit 30 automatisch, autonom und/oder in etwa zeitgleichen Abständen auf das Analysemittel 50 zur Ermittlung der Auslastung des Kommunikationsnetzwerkes 10 zu. Aus diesen Werten wird der Schwellenwert berechnet, der sich mit der Auslastung des Kommunikationsnetzwerkes 10 über den Tagesverlauf dynamisch verändern. Erhält die Rechnereinheit 30 im Anschluss ein Angebot 100, so bedarf es nur noch einer Prüfung, ob das Angebot 100 über oder unter dem aktuellen Schwellenwert liegt. Für den Fall, dass das Angebot 100 oberhalb des Schwellenwertes liegt, kann aus dem Angebot 100 ein Leistungsumfang 110 berechnet und an die Kommunikationseinheit 20 übermittelt werden. Weiterhin ist es denkbar, dass der Leistungsumfang 110 vordefiniert ist, so dass solange das Angebot 100 größer als der aktuelle Schwellenwert ist, immer der gleiche Leistungsumfang 110 an die Kommunikationseinheit 20 übermittelt wird.

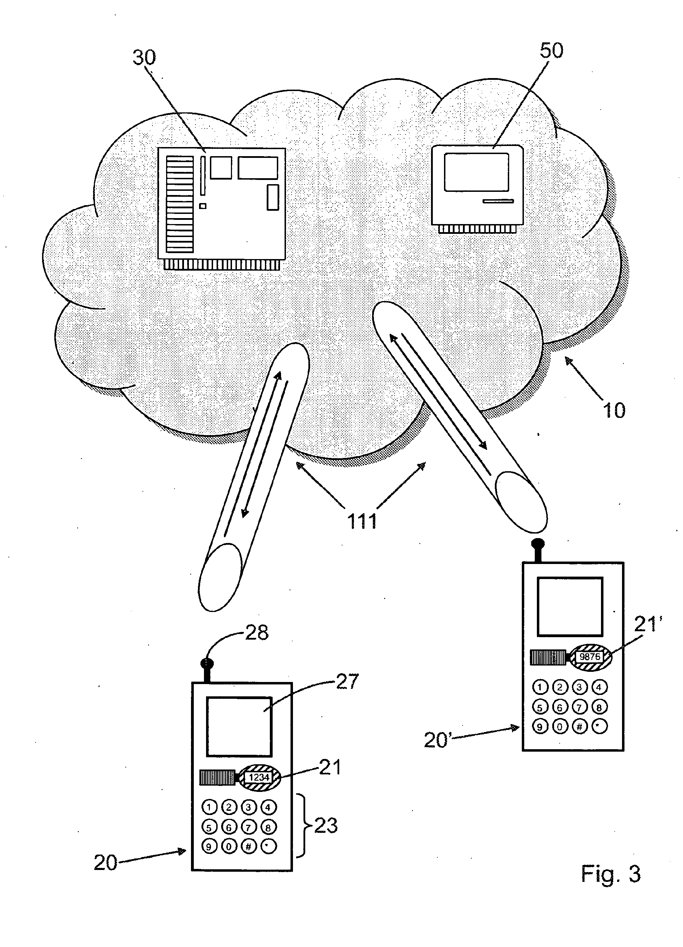

Nach der Übersendung des Leistungsumfanges 110 an die Kommunikationseinheit 20 kann der Benutzer entscheiden, ob die Leistung 111 angenommen werden soll. Übermittelt die Kommunikationseinheit 20 eine entsprechende Information, dass die Leistung 111 in Anspruch genommen werden soll, stellt das Kommunikationsnetzwerk 10 die entsprechende Ressource der Kommunikationseinheit 20 zur Verfügung. Dieser Vorgang ist in Fig. 3 dargestellt, welche die beiden Kommunikationseinheiten 20, 20' aus Fig. 2 zeigt. Nunmehr ist es den beiden Benutzern der Kommunikationseinheiten 20, 20' möglich, miteinander über das Kommunikationsnetzwerk 10 zu kommunizieren.

### Bezugszeichenliste

- 10: Kommunikationsnetzwerk

- 20,20': Kommunikationseinheit
- 21,21': charakteristische Adressierung
- 22: Menüsteuerung
- 23: Eingabemittel
- 25: Informationssatz
- 26: Angabensatz
- 27: Anzeigemittel
- 28: Antenne
- 30: Rechnereinheit

- 40: Kommunikationsverbindung

- 50: Analysemittel
- 55: Datenleitung
- 100: Angebot

- 110: Leistungsumfang
- 111: Leistung

## Patentansprüche

1. Verfahren zur Optimierung einer Auslastung eines Kommunikationsnetzwerkes (10), mit einer Kommunikationseinheit (20,20') und einer Rechnereinheit (30), wobei die Kommunikationseinheit (20,20') eine charakteristische Adressierung (21) aufweist,
die Kommunikationseinheit (20,20') elektronisch eine Kommunikationsverbindung (40) zu der Rechnereinheit (30) im Kommunikationsnetzwerk (10) herstellt,
die Rechnereinheit (30) unmittelbar oder mittelbar auf mindestens ein Analysemittel (50) zugreift,
durch das Analysemittel (50) zeitnah eine Auslastung des Kommunikationsnetzwerkes (10) bestimmt wird,
**dadurch gekennzeichnet, dass**
über die Kommunikationsverbindung (40) von der Kommunikationseinheit (20,20') elektronisch ein Angebot (100) für eine Leistung (111) für die Nutzung des Kommunikationsnetzwerkes (10) an die Rechnereinheit (30) übersandt wird,
die Rechnereinheit (30) aus der Auslastung des Kommunikationsnetzwerkes (10) sowie dem Angebot (100) einen Leistungsumfang (110) der Leistung (111) zur Nutzung des Kommunikationsnetzwerkes (10) berechnet,
und der Leistungsumfang (110) mittels der Kommunikationsverbindung (40) an die Kommunikationseinheit (20,20') übersandt wird.

2. Verfahren nach Anspruch 1,
**dadurch gekennzeichnet,**
**dass**
das Angebot (100) mittels eines eingabemittels (23) in die Kommunikationseinheit (20,20') eingegeben wird,
von dem Analysemittel (50) die Auslastung des Kommunikationsnetzwerkes (10) für den Zugriff der Rechnereinheit (30) bereitgestellt wird.

3. Verfahren nach Anspruch 2,
**dadurch gekennzeichnet,**
**dass** im Anschluss an das Übersenden des Leistungsumfangs (111) der Leistung (110) an die Kommunikationseinheit (20,20') in dem Kommunikationsnetzwerk (10) eine Ressource bereitgestellt wird, die dem Leistungsumfang (110) der Leistung (110) entspricht.

4. Verfahren nach einem der Ansprüche 1 bis 3,
**dadurch gekennzeichnet,**
**dass** mittels einer Menüsteuerung (22) über die Kommunikationseinheit (20,20') das Angebot (100) an die Rechnereinheit (30) übersandt wird.

5. Verfahren nach einem der Ansprüche 1 bis 4,
**dadurch gekennzeichnet,**
**dass** mit dem Angebot (100) ein Informationssatz (25), der einen Angabensatz aufweist, welcher eine Authentifizierung der Kommunikationseinheit (20,20') ermöglicht, an die Rechnereinheit (30) übersandt wird und der Informationssatz (25) bei der Berechnung des Leistungsumfanges (110) der Leistung (111) berücksichtigt wird.

6. Verfahren nach Anspruch 5,
**dadurch gekennzeichnet,**
**dass** der Informationssatz (25) einen Angabensatz (26) aufweist, welcher eine Authentifizierung der Kommunikationseinheit (20,20') ermöglicht, insbesondere, dass der Informationssatz (25) die charakteristische Adressierung (21,21') enthält, besonders bevorzugt, dass die charakteristische Adressierung (21,21') eine Telefonnummer (MSISDN) ist.

7. Verfahren nach einem der Ansprüche 1 bis 6,
**dadurch gekennzeichnet,**
**dass** mit dem Angebot (100) ein Betrag einer Währung und/oder eine zweite charakteristische Adressierung (21,21') einer zweiten Kommunikationseinheit (20,20') übersandt werden.

8. Verfahren nach einem der Ansprüche 1 bis 7,
**dadurch gekennzeichnet,**
**dass** von der Rechnereinheit (30) automatisch, autonom und/oder in etwa zeitgleichen Abständen auf das Analysemittel (50) zur Ermittlung der Auslastung des Kommunikationsnetzwerkes (10) zugegriffen wird,
und aus der Auslastung des Kommunikationsnetzwerkes (10) von der Rechnereinheit (30) ein Schwellenwert für das Angebot (100) berechnet wird.

9. Verfahren nach Ansprüche 8;
**dadurch gekennzeichnet,**
**dass** von der Rechnereinheit ermittelt wird, ob das Angebot (100) über oder unter dem aktuellen Schwellenwert liegt und nur in dem Fall, dass der Betrag des Angebotes (100) über dem berechneten Schwellenwert liegt, der Leistungsumfang (110) der Leistung (111) verschieden von Null ist, und nur in diesem Fall ein Leistung (111) angeboten wird.

10. Verfahren nach einem der Ansprüche 1 bis 9,
**dadurch gekennzeichnet,**
**dass** von dem Analysemittel (50) automatisch, autonom und in etwa zeitgleichen Abschnitten die Auslastung des Kommunikationsnetzwerkes (10) bestimmt wird, und dass von der Rechnereinheit (30) automatisch, autonom und in etwa zeitgleichen Abständen auf das Analysemittel (50) zugegriffen wird.

11. Verfahren nach einem der Ansprüche 1 bis 10,
**dadurch gekennzeichnet,**
**dass** nach Übersenden des Leistungsumfangs (110) an die Kommunikationseinheit (20,20') von dem Benutzer entscheidbar ist, ob die Leistung (111) angenommen wird, wobei bei einer Annahme der Leistung (111) das Kommunikationsnetzwerk (10) die Leistung (111) der Kommunikationseinheit (20,20') zur Verfügung stellt.

12. Verfahren nach einem der Ansprüche 1 bis 11,
**dadurch gekennzeichnet,**
**dass** zur Berechnung des Angebots (100) die Position der Kommunikationseinheit (20) und der zweiten Kommunikationseinheit (20') bestimmt wird und eine Entfernung zwischen den beiden Kommunikationseinheit (20,20') ermittelt wird.

13. Kommunikationssystem mit einer Kommunikationseinheit (20,20') und einem Kommunikationsnetzwerk (10), welches nach einem der oben genannten Verfahren betrieben wird.

## Claims

1. A method for optimising a utilisation of a communication network (10), with a communication unit (20, 20') and a computer unit (30), wherein the communication unit (20, 20') has a characteristic addressing (21),
the communication unit (20, 20') electronically establishes a communication connection (40) to the computer unit (30) in the communication network (10), the computer network (30) accesses at least one analysis means (50) directly or indirectly,
a utilisation of the communication network (10) is determined by the analysis means (50) promptly, **characterised in that**
an offer (100) for a service (111) for the use of the communication network (10) is sent electronically via the communication connection (40) by the communication unit (20, 20') to the computer unit (30),
the computer unit (30) calculates a scope of service (110) of the service (111) for using the communication network (10) from the utilisation of the communication network (10) as well as the offer (100),
and the scope of service (110) is sent by means of the communication connection (40) to the communication unit (20, 20').

2. The method according to claim 1,
**characterised**
**in that**
the offer (100) is entered into the communication unit (20, 20') by means of an input means (23),
the utilisation of the communication network (10) for the access of the computer unit (30) is provided by the analysis means (50).

3. The method according to claim 2,
**characterised**
**in that** subsequent to the sending of the scope of service (110) of the service (111) to the communication unit (20, 20') in the communication network (10), a resource is provided, which corresponds to the scope of service (110) of the service (111).

4. The method according to any one of claims 1 to 3,
**characterised**
**in that** the offer (100) is sent via the communication unit (20, 20') to the computer unit (30) by means of a menu control (22).

5. The method according to any one of claims 1 to 4,
**characterised**
**in that** an information set (25), which has a data set which enables an authentication of the communication unit (20, 20'), is sent with the offer (100) to the computer unit (30), and the information set (25) is taken into account in the calculation of the scope of service (110) of the service (111).

6. The method according to claim 5,
**characterised**
**in that** the information set (25) has a data set (26) which enables an authentication of the communication unit (20, 20'), in particular that the information set (25) contains the characteristic addressing (21, 21'), particularly preferably in that the characteristic addressing (21, 21') is a telephone number (MSISDN).

7. The method according to any one of claims 1 to 6,
**characterised**
**in that** an amount of a currency and/or a second characteristic addressing (21, 21') of a second communication unit (20, 20') are sent with the offer (100).

8. The method according to any one of claims 1 to 7,
**characterised**
**in that** the analysis means (50) is accessed automatically, autonomously and/or at approximately simultaneous intervals by the computer unit (30) for determining the utilisation of the communication network (10),
and a threshold value for the offer (100) is calculated from the utilisation of the communication network (10) by the computer unit (30).

9. The method according to claim 8,
**characterised**
**in that** whether the offer (100) lies above or below the current threshold value is determined by the computer unit and only in the case that the value of the offer (100) lies above the calculated threshold value, the scope of service (110) of the service (111) is different from zero and only in this case, a service (111) is offered.

10. The method according to any one of claims 1 to 9,
**characterised**
**in that** the utilisation of the communication network (10) is determined by the analysis means (50) automatically, autonomously and in approximately simultaneous sections, and in that the analysis means (50) is accessed automatically, autonomously and at approximately simultaneous intervals by the computer unit (30).

11. The method according to any one of claims 1 to 10,
**characterised**
**in that** following sending of the scope of service (110) to the communication unit (20, 20), the user can decide whether the service (111) is accepted, wherein in the case of acceptance of the service (111), the communication network (10) makes the service (111) of the communication unit (20, 20') available.

12. The method according to any one of claims 1 to 11,
**characterised**
**in that** the position of the communication unit (20) and of the second communication unit (20') is determined for calculating the offer (100) and a distance between the two communication units (20, 20') is determined.

13. A communication system with a communication unit (20, 20') and a communication network (10), which is operated according to any one of the above-mentioned methods.

## Revendications

1. Procédé d'optimisation d'un taux d'utilisation d'un réseau de communication (10), comportant une unité de communication (20,20') et une unité de calcul (30), dans lequel l'unité de communication (20,20') présente un adressage caractéristique (21),
l'unité de communication (20,20') établit électroniquement une liaison de communication (40) à l'unité de calcul (30) dans le réseau de communication (10),
l'unité de calcul (30) accède directement ou indirectement à au moins un moyen d'analyse (50),
un taux d'utilisation du réseau de communication (10) est déterminé actuellement par le moyen d'analyse (50),
**caractérisé en ce que**
une offre (100) d'une prestation (111) pour l'utilisation du réseau de communication (10) est transmise électroniquement à l'unité de calcul (30) par l'unité de communication (20,20') par l'intermédiaire de la liaison de communication (40),
l'unité de calcul (30) calcule d'après le taux d'utilisation du réseau de communication (10) ainsi que d'après l'offre (100) un volume de la prestation (110) de la prestation (111) en vue de l'utilisation du réseau de communication (10),
et le volume de la prestation (110) est transis au moyen de la liaison de communication (40) à l'unité de communication (20,20').

2. Procédé selon la revendication 1,
**caractérisé en ce que**
l'offre (100) est entrée au moyen d'un moyen d'entrée (23) dans l'unité de communication (20,20'),
le taux d'utilisation du réseau de communication (10) est fourni par le moyen d'analyse (50) pour l'accès de l'unité de calcul (30).

3. Procédé selon la revendication 2,
**caractérisé en ce que**
à la suite de la transmission du volume de la prestation (110) de la performance (111) à l'unité de communication (20,20') dans le réseau de communication (10) une ressource est fournie, qui correspond au volume de la prestation (110) de la performance (111).

4. Procédé selon une des revendications 1 à 3,
**caractérisé en ce que**
au moyen d'une commande de menu (22) par l'intermédiaire de l'unité de communication (20,20'), l'offre (100) est transmise à l'unité de calcul (30).

5. Procédé selon une des revendications 1 à 4,
**caractérisé en ce que**
avec l'offre (100) un jeu d'informations (25), qui présente un jeu de données, qui permet une authentification de l'unité de communication (20,20'), est transmis à l'unité de calcul (30) et le jeu d'informations (25) est pris en compte lors du calcul du volume de la prestation (110) de la prestation (111).

6. Procédé selon la revendication 5,
**caractérisé en ce que**
le jeu d'informations (25) présente un jeu de données (26), qui permet une authentification de l'unité de communication (20,20'), notamment **en ce que** le jeu d'informations (25) contient l'adressage caractéristique (21,21'), de manière particulièrement préférée **en ce que** l'adressage caractéristique (21,21') est un numéro de téléphone (MSISDN).

7. Procédé selon une des revendications 1 à 6,
**caractérisé en ce que**
avec l'offre (100) est transmis un montant d'une monnaie et/ou un deuxième adressage caractéristique (21,21') d'une deuxième unité de communication (20,20').

8. Procédé selon une des revendications 1 à 7, **caractérisé en ce que**
le moyen d'analyse (50) est accédé de manière automatique, autonome et/ou à intervalles approximativement simultanés par l'unité de calcul (30) pour déterminer le taux d'utilisation du réseau de communication (10),
et une valeur seuil pour l'offre (100) est calculée par l'unité de calcul (30) d'après le taux d'utilisation du réseau de communication (10).

9. Procédé selon la revendication 8,
**caractérisé en ce que**
il est déterminé par l'unité de calcul, si l'offre (100) se situe au dessus ou au dessous de la valeur seuil actuelle et seulement dans le cas où le montant de l'offre (100) se situe au dessus de la valeur seuil calculée, le volume de la prestation (110) de la prestation (111) est différent de zéro, et seulement dans ce cas une prestation (111) est proposée.

10. Procédé selon une des revendications 1 à 9,
**caractérisé en ce que**
le taux d'utilisation du réseau de communication (10) est déterminé de manière automatique, autonome et à des sections approximativement simultanées par le moyen d'analyse (50), et **en ce que** le moyen d'analyse (50) est accédé par l'unité de calcul (30) de manière automatique, autonome et à intervalles approximativement simultanés.

11. Procédé selon une des revendications 1 à 10,
**caractérisé en ce que**
après la transmission du volume de la prestation (110) à l'unité de communication (20,20') il peut être décidé par l'utilisateur, si la prestation (111) est acceptée, dans lequel en cas d'acceptation de la prestation (111) le réseau de communication (10) met la prestation (111) à la disposition de l'unité de communication (20, 20').

12. Procédé selon une des revendications 1 à 11,
**caractérisé en ce que**
pour calculer l'offre (100) la position de l'unité de communication (20) et de la deuxième unité de communication (20') est déterminée et une distance entre les deux unités de communication (20,20') est calculée.

13. Système de communication comportant une unité de communication (20,20') et un réseau de communication (10'), qui est exploité selon une des procédés mentionnés ci-dessus.
